# EUROPEAN PATENT SPECIFICATION

(11) **EP 4 542 404 B1**
(45) Date of publication and mention of the grant of the patent: **01.07.2026**
(21) Application number: 24205516.8
(22) Date of filing: 09.10.2024
(51) Int. Cl.: G06F 15/02

(54) **COMPUTING DEVICE, INFORMATION PROCESSING METHOD, AND PROGRAM**
DATENVERARBEITUNGSVORRICHTUNG, INFORMATIONSVERARBEITUNGSVERFAHREN UND PROGRAMM
DISPOSITIF INFORMATIQUE, PROCÉDÉ DE TRAITEMENT D'INFORMATIONS ET PROGRAMME

(30) Priority: 20.10.2023 JP 2023180674
(43) Date of publication of application: 23.04.2025
(73) Proprietor: CASIO COMPUTER CO., LTD., Tokyo 151-8543 (JP)
(72) Inventor: Murakami, Chinari, Hamura-shi, Tokyo, 205-8555 (JP); Tanaka, Toshiaki, Hamura-shi, Tokyo, 205-8555 (JP); Tashiro, Saki, Hamura-shi, Tokyo, 205-8555 (JP)
(74) Representative: Grünecker Patent- und Rechtsanwälte PartG mbB

(56) References cited:
- US-A1- 2002 075 227

## Description

### CROSS-REFERENCE TO RELATED APPLICATIONS

This application claims the priority and benefits of Japanese Patent Application No. 2023-180674, filed on October 20, 2023.

### TECHNICAL FIELD

The present disclosure relates to a computing device, an information processing method, and a program.

### DESCRIPTION OF RELATED ART

There has been disclosed a scientific calculator having a graph analysis function in which a characteristic point of a drawn graph such as a maximum, a minimum, a root, a y-intercept, an integral value, an inflection point, or an intersection point is derived from a functional expression (see, for example, JP 2005-070880A).

Document US 2002/075227 A1, which discloses the features of the preamble of claim 1, describes a scientific calculator with a function of drawing and analyzing graphs. Graph properties can be analyzed and evaluated by considering particular points of interest (POI), such as, the intersection point of two graphs in a coordinate system. By pressing an arrow key, a user can move the cursor from one POI to a next POI ("tracing function"). Coordinate values of POls can be stored in a table.

### SUMMARY OF THE INVENTION

The scientific calculator disclosed in JP 2005-070880A can store and display the derived characteristic point (analysis value) of the graph. However, the scientific calculator cannot store the characteristic point (analysis value) in a state where the stored characteristic point can be used universally for derivation of a different characteristic point, an input value in another function, or the like.

The present disclosure has been made in view of such a problem, and objects of the present disclosure include making it possible to universally use an analysis value derived by a graph analysis function. Despite some progress in this respect having been achieved with the teaching of US 2002/075227 A1, there is room for further improvement.

This is achieved by the features of the independent claims.

According to the present invention, the analysis values derived by the graph analysis function can be used universally.

### BRIEF DESCRIPTION OF DRAWINGS

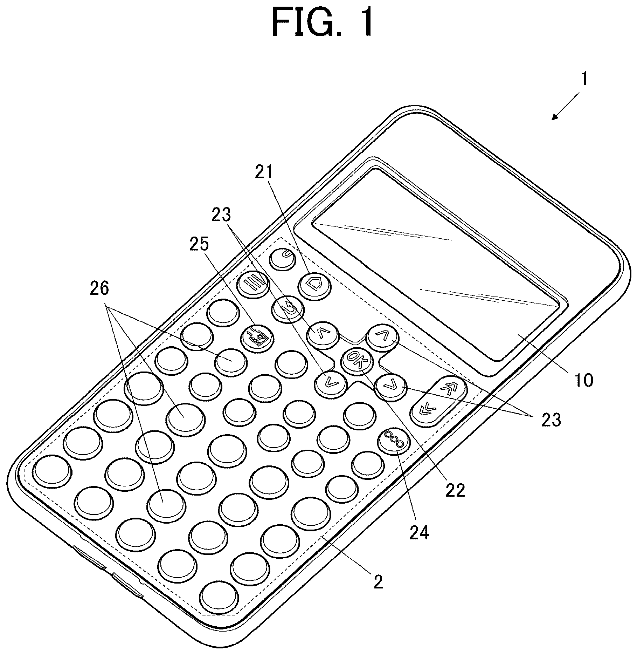

In the drawings: FIG. 1 is a perspective view of the appearance of a scientific calculator;
FIG. 2 is a block diagram of the functional configuration of the scientific calculator;
FIG. 3 illustrates an example of the content of a variable list table;
FIG. 4 is a flowchart illustrating the control procedure of graph analysis process for "y-Cal";
FIG. 5 illustrates an example of a graph display screen;
FIG. 6 illustrates an example of a tool menu screen;
FIG. 7 illustrates an example of an analysis menu screen;
FIG. 8 illustrates an example of a variable x input screen;
FIG. 9 illustrates an example of the variable x input screen;
FIG. 10 illustrates an example of the graph display screen;
FIG. 11 illustrates an example of a variable list screen;
FIG. 12 is a flowchart illustrating the control procedure of graph analysis process for "x-Cal";
FIG. 13 illustrates an example of a variable y input screen;
FIG. 14 illustrates an example of the variable y input screen;
FIG. 15 illustrates an example of the graph display screen; and
FIG. 16 illustrates an example of the variable list screen.

### DETAILED DESCRIPTION

Hereinafter, one or more embodiments according to the present disclosure will be described with reference to the drawings. FIG. 1 is a perspective view of the appearance of a scientific calculator 1 as an example of a computing device according to the present disclosure. As shown in FIG. 1, the scientific calculator 1 includes an input key group 2 having various key groups, and a display 10.

The input key group 2 is a group of keys for receiving an input of a component of a mathematical expression such as a numerical value or a calculation symbol from a user or receiving an instruction of various processes. The input key group 2 includes a plurality of keys each assigned a unique function. In the present embodiment, the input key group 2 includes, for example, a home key 21, an OK key 22, cursor keys 23 for each of up, down, left, and right directions, a tool key 24, a variable key 25, a numeric keypad 26, and the like.

The display 10 includes, for example, a liquid crystal display (LCD) or the like, and displays various data such as a character, a symbol, a sign, a mathematical expression, a calculation result, a table, and a graph according to an operation on the input key group 2.

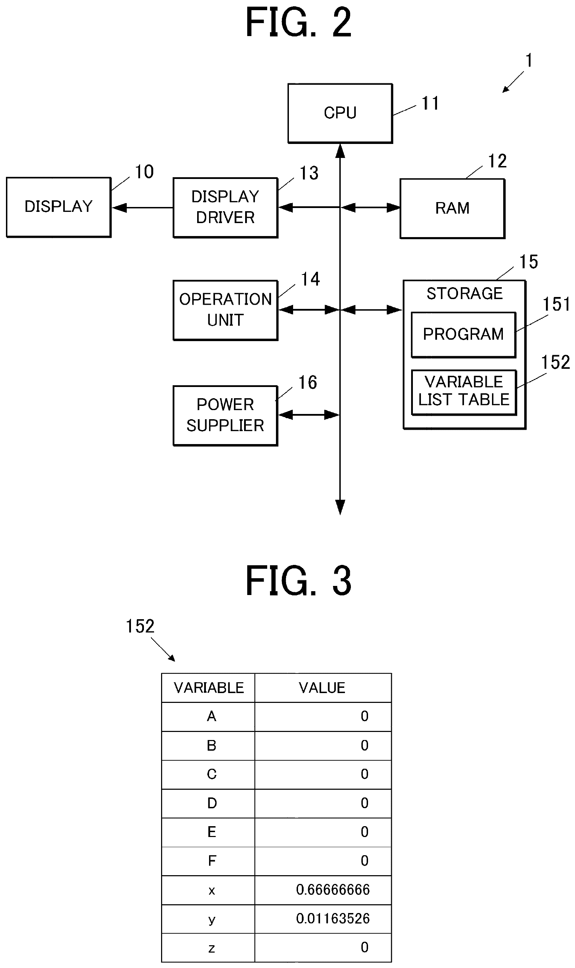

Next, the functional configuration of the scientific calculator 1 will be described. As shown in FIG. 2, the scientific calculator 1 includes a central processing unit (CPU) 11, a random-access memory (RAM) 12, a display driver 13, an operation unit 14, a storage 15, and a power supplier 16.

The CPU 11 is a processor that controls behavior of each unit of the scientific calculator 1 by reading and executing a program 151 stored in the storage 15 and performing various arithmetic processing. The CPU 11 functions as a controller (processor) of the present disclosure. In FIG. 2, a single CPU 11 is shown, but the present disclosure is not limited thereto. Two or more processors such as CPUs may be provided, and the processing executed by the CPU 11 according to the present embodiment may be shared among the two or more processors to execute.

The RAM 12 provides a working memory space for the CPU 11 and stores temporary data. The display driver 13 performs drive control to display various kinds of information on the display 10 described above under the control of the CPU 11. The operation unit 14 includes the input key group 2 described above, and outputs an operation signal corresponding to a key operation by the user to the CPU 11. The storage 15 is a memory such as a flash memory. The storage 15 stores the program 151 executed by the CPU 11, various setting data, and the like. The program 151 is stored in the storage 15 in the form of a computer-readable program code. The storage 15 also stores a variable list table 152.

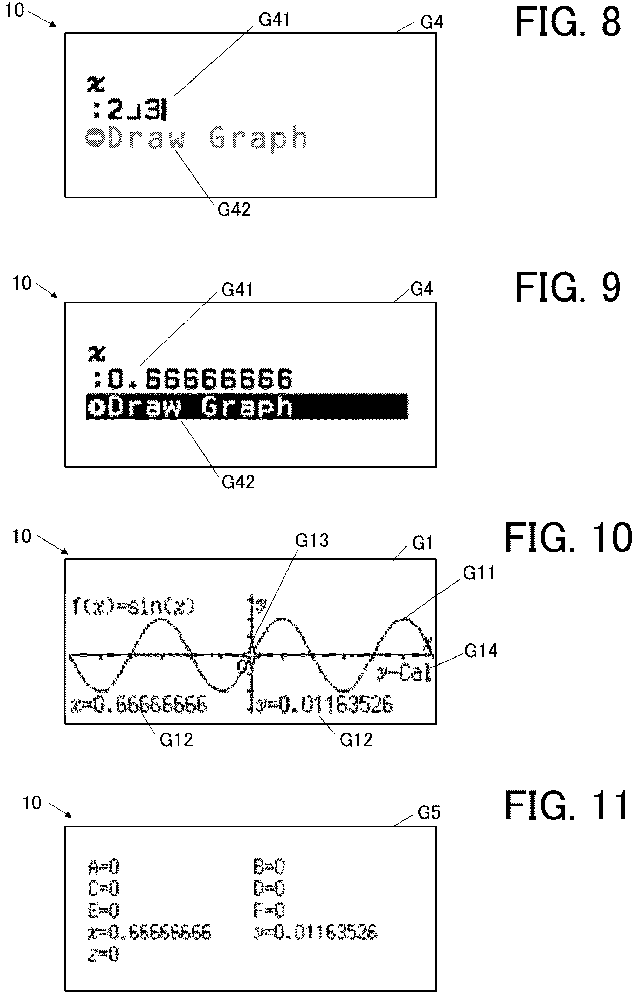

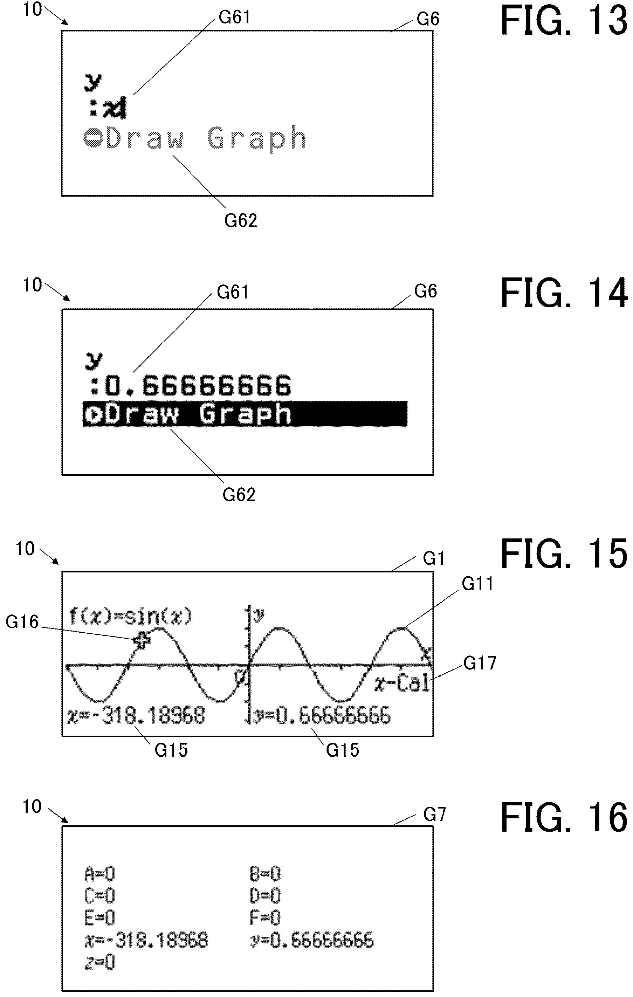

As shown in FIG. 3, the variable list table 152 is a table for storing values of nine preset variables (A, B, C, D, E, F, x, y, and z). The value of each variable is stored in the variable list table 152 under the control of the CPU 11. Specifically, the variable list table 152 can store a user-specified value in association with a user-specified variable name among a plurality of variable names (A, B, C, D, E, F, x, y, and z) included in the variable list table 152. When various functions that require an input value are executed, the value of each variable stored in the variable list table 152 can be input (utilized) as the input value by specifying a desired variable name (for example, "x"), thereby allowing the value stored in association with the desired variable name (for example, "0.66666666") to be input (utilized). That is, the CPU 11 can execute a universal-purpose variable utilization function in which the value of a variable name specified by the user among the plurality of variable names included in the variable list table 152 is input as an input value required for a function specified by the user. In the present embodiment, when the variable key 25 (see FIG. 1) is pressed, a variable list screen displaying a list of the values of the nine variables stored in the variable list table 152 is displayed on the display 10. Examples of the variable list screen include a variable list screen G5 (see FIG. 11) and a variable list screen G7 (see FIG. 16). In this embodiment, the stored content of the variable list table 152 is retained even after the user has finished executing the specified function or turned off the power, and thus can be used at any time by a function requiring an input value.

Returning to FIG. 2, the power supplier 16 includes a battery or the like, and supplies power to each unit of the scientific calculator 1.

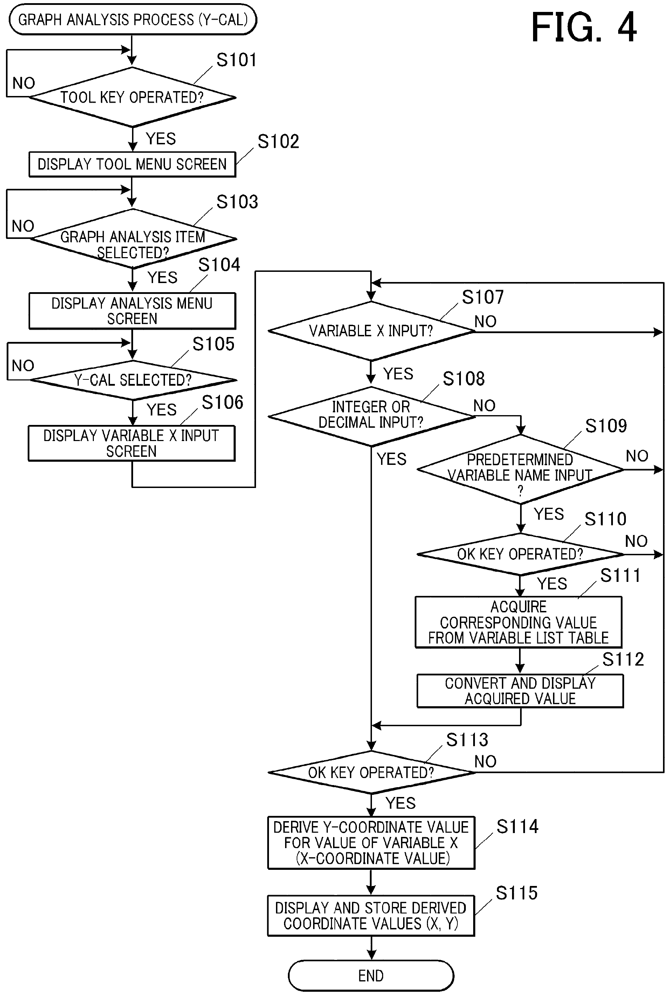

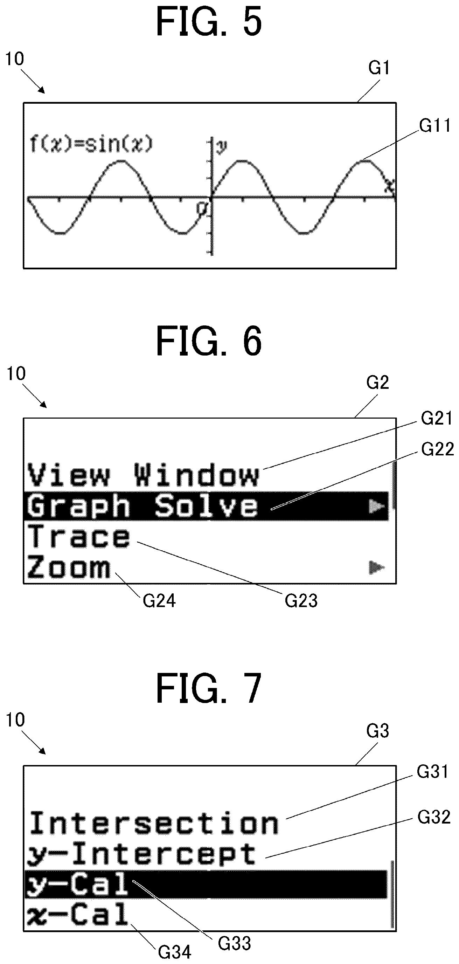

Next, operations of the scientific calculator 1 will be explained. Specifically, with reference to FIG. 4, an operation in which the CPU 11 of the scientific calculator 1 analyzes a y-coordinate value with respect to a desired x-coordinate value of a graph G11 (for example, y=sin(x)) displayed on a graph display screen G1 (see FIG. 5) will be described . Hereinafter, analyzing the y-coordinate value with respect to the desired x-coordinate value of the graph G11 is referred to as "y-Cal". In order to achieve the above operation, the CPU 11 executes a graph analysis process for "y-Cal" shown in FIG. 4. The graph analysis process can be executed when a graph application among a plurality of applications included in the scientific calculator 1 is activated.

As shown in FIG. 4, it is assumed that the CPU 11 of the scientific calculator 1 displays the graph display screen G1 (see FIG. 5) on the display 10 before executing the graph analysis process for "y-Cal". The graph G11 on the graph display screen G1 is generated based on a calculation formula (e.g., y=sin(x)) specified by an operation of the input key group 2. Here, it is assumed for two variables of "x" as the first variable and "y" as the second variable in the calculation formula that one variable is dependent on the other, and vice versa.

As shown in FIG. 4, when the graph analysis process for "y-Cal" is started, the CPU 11 first determines whether the tool key 24 (see FIG. 1) has been operated (step S101). In step S101, if it is determined that the tool key 24 has not been operated (step S101; NO), the CPU 11 repeatedly performs the determination process of step S101 until the tool key 24 is operated. In step S101, if it is determined that the tool key 24 has been operated (step S101; YES), the CPU 11 displays the tool menu screen G2 on the display 10 (step S102).

As shown in FIG. 6, the tool menu screen G2 displays menu items specific to the graph application such as a "View Window" G21, a" Graph Solve " G22, a "Trace" G23, and a" Zoom" G24 as a tool menu in a selectable manner. The "View Window" G21 is for setting the graph G11 displayed on the graph display screen G1. The "Graph Solve" G22 is for performing various analyses related to the graph G11. The "Trace" G23 is for reading coordinate values on the graph G11. The "Zoom" G24 is for enlarging and reducing the graph G11.

Returning to FIG. 4, the CPU 11 then determines whether the "Graph Solve" G22 has been selected on the tool menu screen G2 (step S103). In step S103, if it is determined that the "Graph Solve" G22 has not been selected (step S103; NO), the CPU 11 repeatedly performs the determination process of step S103 until the "Graph Solve" G22 is selected. In step S103, if it is determined that the "Graph Solve" G22 has been selected (step S103; YES), the CPU 11 displays the analysis menu screen G3 on the display 10 (step S104).

As shown in FIG. 7, the analysis menu screen G3 displays items such as an "Intersection" G31, a "y-Intercept" G32, a "y-Cal" G33, and a "x-Cal" G34 as an analysis menu in a selectable manner. The "Intersection" G31 is for analyzing an intersection of two graphs (not shown) displayed on the graph display screen G1. The "y-Intercept" G32 (fourth condition) is for analyzing a y-axis intercept of the graph G11 displayed on the graph display screen G1. The "y-Cal" G33 (sixth condition) is for analyzing a y-coordinate value with respect to an x-coordinate value of the graph G11. The "x-Cal" G34 (seventh condition) is for analyzing an x-coordinate value with respect to a y-coordinate value of the graph G11. In the present embodiment, in addition to the above four items, the following items are set as menu items in the analysis menu: a "ROOT" (first condition) for analyzing a root of the graph G11; a "Maximum Value" (second condition) for analyzing a maximum value of the graph G11; and a "Minimum Value" (third condition) for analyzing a minimum value of the graph G11. That is, in the present embodiment, a graph analysis function of the scientific calculator 1 can perform analysis on the seven items of "ROOT", "Maximum Value", "Minimum Value", "Intersection", "y-Intercept", "y-Cal", and "x-Cal".

Returning to FIG. 4, the CPU 11 then determines whether the "y-Cal" G33 has been selected on the analysis menu screen G3 (step S105). In step S105, if it is determined that the "y-Cal" G33 has not been selected (step S105; NO), the CPU 11 repeatedly performs the determination process of step S105 until the "y-Cal" G33 is selected. In step S105, if it is determined that the "y-Cal" G33 has been selected (step S105; YES), the CPU 11 displays a variable x input screen G4 on the display 10 (step S106).

As shown in FIG. 8, the variable x input screen G4 includes a value input region G41 for inputting a value of the variable x, and a "Draw Graph" G42. In the value input region G41, a fraction can be input besides an integer or a decimal. In addition, in the value input region G41, the variable names (A, B, C, D, E, F, x, y, and z) of the variables that can store values in the variable list table 152 can be input. In the example of FIG. 8, "2/3", which is a fraction, is input in the value input region G41. However, when a fraction or a variable name is input in the value input region G41, it is necessary to convert the value into an integer or a decimal by operating the OK key 22 (see FIG. 1). When an integer or a decimal is not input in the value input region G41, that is, when the value input region G41 is left blank or when a fraction or a variable name is input in the value input region G41, a symbol (a symbol with a horizontal bar surrounded by a circle) indicating restriction of the analysis of "y-Cal" is attached to the head of the "Draw Graph" G42, and the "Draw Graph" G42 is displayed in a gray-out state, making it impossible to execute the analysis of "y-Cal".

FIG. 9 illustrates an example of the variable x input screen G4 when "2/3" input in the value input region G41 is converted to a decimal. As shown in FIG. 9, on the variable x input screen G4, when "2/3" input in the value input region G41 is converted to "0.66666666", which is a decimal, a symbol (a symbol with a right-pointing triangle surrounded by a circle) indicating that the analysis of "y-Cal" is possible is attached to the head of the "Draw Graph" G42, and the "Draw Graph" G42 is highlighted, making it possible to execute the analysis of "y-Cal".

Returning to FIG. 4, the CPU 11 then determines whether an input related to the variable x has been made in the value input region G41 on the variable x input screen G4 (step S107). In step S107, if it is determined that no input related to the variable x has been made in the value input region G41 on the variable x input screen G4 (step S107; NO), the CPU 11 repeatedly performs the determination process of step S107 until an input related to the variable x is made. In step S107, if it is determined that an input related to the variable x has been made (step S107; YES), the CPU 11 determines whether the input is an integer or a decimal (step S108).

In step S108, if it is determined that the input is an integer or a decimal (step S108; YES), the CPU 11 advances the process to step S113. In step S108, if it is determined that the input is not an integer or a decimal (step S108; NO), the CPU 11 determines whether the input is a predetermined variable name (step S109). Here, the predetermined variable name means one of the variable names (A to F, x, y, and z) of the nine variables set in the variable list table 152.

In step S109, if it is determined that the input is not the predetermined variable name (step S109; NO), the CPU 11 returns the process to step S107 and performs the subsequent process. Here, for example, the input is a fraction as described above is a case where it is determined that the input is not the predetermined variable name. In step S109, if it is determined that the input is the predetermined variable name (step S109; YES), the CPU 11 determines whether the OK key 22 (see FIG. 1) has been operated (step S110).

In step S110, if it is determined that the OK key 22 has not been operated (step S110; NO), the CPU 11 returns the process to step S107 and performs the subsequent process. In step S110, if it is determined that the OK key 22 has been operated (step S110; YES), the CPU 11 acquires the value corresponding to the input variable name from the variable list table 152 (see FIG. 3) (step S111).

Next, the CPU 11 converts the variable name input in the value input region G41 on the variable x input screen G4 into the value acquired in step S111 and displays the value (step S112). Then, the CPU 11 advances the process to step S113 and determines whether the OK key 22 has been operated (step S113). In step S113, if it is determined that the OK key 22 has not been operated (step S113; NO), the CPU 11 returns the process to step S107 and performs the subsequent process.

In step S113, if it is determined that the OK key 22 has been operated (step S113; YES), the CPU 11 derives a y-coordinate value (analysis value) of the graph G11 (see FIG. 5) with respect to the value of the variable x (x-coordinate value) input in the value input region G41 on the variable x input screen G4 (step S114). Here, the CPU 11 executes the graph analysis function in which the analysis value is derived by analyzing, based on the specified condition ("y-Cal" (sixth condition)), the graph G11 expressed in the coordinate system (xy coordinates) corresponding to the specified calculation formula (y=sin(x)). The analysis value also includes the value (x-coordinate value) of the variable x input in the value input region G41 on the variable x input screen G4.

Next, as shown in FIG. 10, the CPU 11 displays the graph display screen G1 on the display 10, where the graph G11 is displayed again, and displays xy coordinate values G12 (x = 0.66666666, y = 0.01163526) as the analysis results of "y-Cal" on the graph display screen G1. The CPU 11 also stores the value "0.66666666" of the variable x and the value "0.01163526" of the variable y in the variable list table 152 (step S115). Here, the CPU 11 executes an analysis value storing function in which the analysis values (xy coordinate values (variable solutions)) derived by the graph analysis function are stored as the value of the variable x and the value of the variable y in the variable list table 152. In the analysis value storing function, the CPU 11 stores the analysis values in association with the variable names (variable x and variable y) handled in the graph analysis function among the plurality of variable names included in the variable list table 152 without the user performing an operation of specifying the variable names. In other words, in the analysis value storing function, after the analysis values are derived by the graph analysis function, the CPU 11 stores the analysis values in association with the variable names (variable x and variable y) of the variables included in the calculation formula (y = sin(x)) or the variable names in the variable list table 152 corresponding to the variable names indicating the coordinate axes (x-axis and y-axis) of the graph G11, without the user performing an operation of instructing to store the analysis values or an operation of specifying the variable names in which the analysis values are stored. In step S115, the coordinate position corresponding to the xy coordinate values (x=0.66666666, y=0.01163526) on the graph display screen G1 is plotted by a cross symbol G13, and information G14 (for example, text information of "y-Cal") indicating that the graph analysis process for "y-Cal" has been performed is displayed. After executing the process of step S115, the CPU 11 ends the graph analysis process for "y-Cal". After the graph analysis process is completed, when the variable key 25 (see FIG. 1) is pressed, the variable list screen G5 is displayed on the display 10, as shown in FIG. 11. This makes it possible to confirm that the xy coordinate values (analysis values), which are the analysis results of "y-Cal," are stored in the variable list table 152.

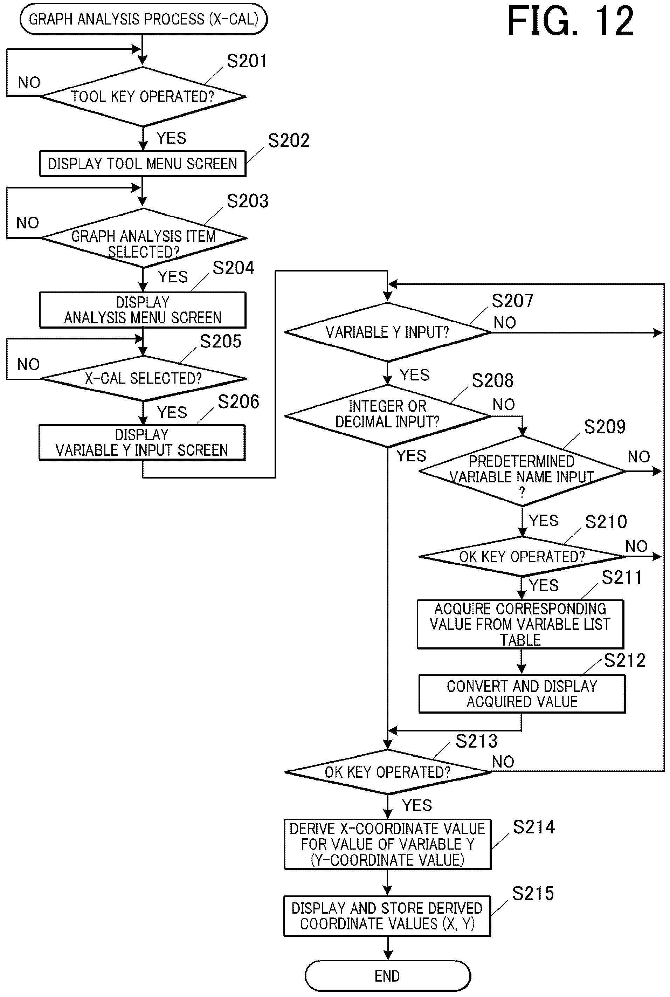

Next, with reference to FIG. 12, an operation in which the CPU 11 of the scientific calculator 1 analyzes a x-coordinate value with respect to a desired y-coordinate value of the graph G11 (for example, y=sin(x)) displayed on the graph display screen G1 (see FIG. 10) will be described . Hereinafter, analyzing the x-coordinate value with respect to the desired y-coordinate value of the graph G11 is referred to as "x-Cal". In order to realize the above operation, the CPU 11 executes a graph analysis process for "x-Cal" shown in FIG. 12. The graph analysis process can be executed when a graph application among a plurality of applications included in the scientific calculator 1 is activated.

As shown in FIG. 12, it is assumed that the CPU 11 of the scientific calculator 1 displays the graph display screen G1 (see FIG. 10) on the display 10 before executing the graph analysis process for "x-Cal". In the following description, it is assumed that the graph analysis process for "y-Cal" described above has been executed in advance, and the value "0.66666666" of the variable x and the value "0.01163526" of the variable y, which are the analysis results of "y-Cal", are stored in the variable list table 152 (see FIG. 3).

As shown in FIG. 12, when the graph analysis process for "x-Cal" is started, the CPU 11 first determines whether the tool key 24 (see FIG. 1) has been operated (step S201). In step S201, if it is determined that the tool key 24 has not been operated (step S201; NO), the CPU 11 repeatedly performs the determination process of step S201 until the tool key 24 is operated. In step S201, if it is determined that the tool key 24 has been operated (step S201; YES), the CPU 11 displays the tool menu screen G2 (see FIG. 6) on the display 10 (step S202).

The CPU 11 then determines whether the "Graph Solve" G22 has been selected on the tool menu screen G2 (step S203). In step S203, if it is determined that the "Graph Solve" G22 has not been selected (step S203; NO), the CPU 11 repeatedly performs the determination process of step S203 until the "Graph Solve" G22 is selected. In step S203, if it is determined that the "Graph Solve" G22 has been selected (step S203; YES), the CPU 11 displays the analysis menu screen G3 (see FIG. 7) on the display 10 (step S204).

The CPU 11 then determines whether the "x-Cal" G34 has been selected on the analysis menu screen G3 (step S205). In step S205, if it is determined that the "x-Cal" G34 has not been selected (step S205; NO), the CPU 11 repeatedly performs the determination process of step S205 until the "x-Cal" G34 is selected. In step S205, if it is determined that the "x-Cal" G34 has been selected (step S205; YES), the CPU 11 displays a variable y input screen G6 on the display 10 (step S206).

As shown in FIG. 13, the variable y input screen G6 includes a value input region G61 for inputting the value of the variable y, and a "Draw Graph" G62. In the value input region G61, a fraction can be input besides an integer or a decimal. In addition, in the value input region G61, the variable names (A, B, C, D, E, F, x, y, and z) of the variables that can store values in the variable list table 152 can be input. In the example of FIG. 13, "x", which is one of the variable names, is input in the value input region G61. However, when a fraction or a variable name is input in the value input region G61, it is necessary to convert the value into an integer or a decimal by operating the OK key 22 (see FIG. 1). When an integer or a decimal is not input in the value input region G61, that is, when the value input region G61 is left blank or when a fraction or a variable name is input in the value input region G61, a symbol (a symbol with a horizontal bar surrounded by a circle) indicating restriction of the analysis of "x-Cal" is attached to the head of the "Draw Graph" G62, and the "Draw Graph" G62 is displayed in a gray-out state, making it impossible to execute the analysis of "x-Cal".

FIG. 14 illustrates an example of the variable y input screen G6 when "x" input in the value input region G61 is converted to a decimal. As shown in FIG. 14, on the variable y input screen G6, when "x" (variable name) input in the value input region G61 is converted to "0.66666666", which is the decimal stored in the variable list table 152 associated with the "variable x", a symbol (a symbol with a right-pointing triangle surrounded by a circle) indicating that the analysis of "x-Cal" is possible is attached to the head of the "Draw Graph" G62, and the "Draw Graph" G62 is highlighted, allowing the analysis of "x-Cal" to be executed.

Returning to FIG. 12, the CPU 11 then determines whether an input related to the variable y has been made in the value input region G61 on the variable y input screen G6 (step S207). In step S207, if it is determined that no input related to the variable y has been made in the value input region G61 on the variable y input screen G6 (step S207; NO), the CPU 11 repeatedly performs the determination process of step S207 until an input related to the variable y is made. In step S207, if it is determined that an input related to the variable y has been made (step S207; YES), the CPU 11 determines whether the input is an integer or a decimal (step S208).

In step S208, if it is determined that the input is an integer or a decimal (step S208; YES), the CPU 11 advances the process to step S213. In step S208, if it is determined that the input is not an integer or a decimal (step S208; NO), the CPU 11 determines whether the input is a predetermined variable name (step S209). Here, the predetermined variable name means one of the variable names (A, B, C, D, E, F, x, y, and z) of the nine variables set in the variable list table 152.

In step S209, if it is determined that the input is not the predetermined variable name (step S209; NO), the CPU 11 returns the process to step S207 and performs the subsequent process. Here, cases where it is determined that the input is not the predetermined variable name include, for example, the case where the input is a fraction as described above. In step S209, if it is determined that the input is the predetermined variable name, which is, for example, "x" (variable name), (step S209; YES), the CPU 11 determines whether the OK key 22 (see FIG. 1) has been operated (step S210).

In step S210, if it is determined that the OK key 22 has not been operated (step S210; NO), the CPU 11 returns the process to step S207 and performs the subsequent process. In step S210, if it is determined that the OK key 22 has been operated (step S210; YES), the CPU 11 acquires the value (for example, "0.66666666") corresponding to the input variable name (for example, "x") from the variable list table 152 (see FIG. 3) (step S211).

Next, the CPU 11 converts the variable name (for example, "x") input in the value input region G61 on the variable y input screen G6 into the value (for example, "0.66666666") acquired in step S211 and displays the value (step S212; see FIG. 14). Here, the CPU 11 executes an analysis value reuse function in which, when a specific function (graph analysis function) that requires an input value is executed, an analysis value stored as the value of a predetermined variable name is input as the input value required for the specific function (graph analysis function) in response to specification of the predetermined variable name in the variable list table 152. Then, the CPU 11 advances the process to step S213.

Next, the CPU 11 determines whether the OK key 22 has been operated (step S213). In step S213, if it is determined that the OK key 22 has not been operated (step S213; NO), the CPU 11 returns the process to step S207 and performs the subsequent process.

In step S213, if it is determined that the OK key 22 has been operated (step S213; YES), the CPU 11 derives a x-coordinate value (analysis value) of the graph G11 (see FIG. 15) with respect to the value of the variable y (y-coordinate value) input in the value input region G61 on the variable y input screen G6 (step S214). Here, the CPU 11 executes the graph analysis function in which the analysis value is derived by analyzing, based on the specified condition ("x-Cal" (seventh condition)), the graph G11 expressed in the coordinate system (xy coordinates) corresponding to the specified calculation formula (y=sin(x)). The analysis value also includes the value (y-coordinate value) of the variable y input in the value input region G61 on the variable y input screen G6.

Next, as shown in FIG. 15, the CPU 11 displays the graph display screen G1 on the display 10, where the graph G11 is displayed again, and displays xy coordinate values G15 (x = - 318.18968, y = 0.66666666) as the analysis results of "x-Cal" on the graph display screen G1. The CPU 11 also stores the value "-318.18968" of the variable x and the value "0.66666666" of the variable y in the variable list table 152 (step S215). Here, the CPU 11 executes the analysis value storing function in which the analysis values (xy coordinate values (variable solutions)) derived by the graph analysis function are stored as the value of the variable x and the value of the variable y in the variable list table 152. In the analysis value storing function, the CPU 11 stores the analysis values in association with the variable names (variable x and variable y) handled in the graph analysis function among the plurality of variable names included in the variable list table 152 without the user performing an operation of specifying the variable names. In other words, in the analysis value storing function, after the analysis values are derived by the graph analysis function, the CPU 11 stores the analysis values in association with the variable names (variable x and variable y) of the variables included in the calculation formula (y = sin(x)) or the variable names in the variable list table 152 corresponding to the variable names indicating the coordinate axes (x-axis and y-axis) of the graph G11, without the user performing an operation of instructing to store the analysis values or an operation of specifying the variable names in which the analysis values are stored. In step S215, the coordinate position corresponding to the xy coordinate values (x=-318.18968, y=0.66666666) on the graph display screen G1 is plotted by a cross symbol G16, and information G17 (for example, text information of "x-Cal") indicating that the graph analysis process for "x-Cal" has been performed is displayed. After executing the process of step S215, the CPU 11 ends the graph analysis process for "x-Cal". After the graph analysis process is completed, when the variable key 25 (see FIG. 1) is pressed, the variable list screen G7 is displayed on the display 10, as shown in FIG. 16. This makes it possible to confirm that the xy coordinate values (analysis values), which are the analysis results of "x-Cal," are stored in the variable list table 152.

As described above, the scientific calculator 1 according to the present embodiment includes the CPU 11 (controller) that executes: the graph analysis function in which an analysis value is derived by analyzing, based on a specified condition (e.g., "y-Cal"), the graph G11 (see FIG. 5) expressed in the coordinate system (e.g., xy coordinates) corresponding to the specified calculation formula; the analysis value storing function in which the analysis value derived by the graph analysis function is stored in the storage 15 as the value of a predetermined variable name (e.g., variable x and variable y) in the variable list table 152 in which a plurality of variable names are associated with respective values; and the analysis value reuse function in which, when a specific function (e.g., the graph analysis function) that requires an input value is executed, the analysis value stored as the value of a predetermined variable name is input as the input value required for the specific function in response to specification of the predetermined variable name in the variable list table 152. Therefore, according to the scientific calculator 1, when a specific function that requires an input value is executed, by executing the analysis value reuse function, the analysis values (xy coordinate values) derived by executing the graph analysis function can be universally used. As a result, when a specific function that requires an input value is executed, even for an analysis value that can be erroneously input by a manual input such as a repeating decimal or a circumference ratio, the analysis value can be accurately and easily input. That is, the interaction process between the user and the scientific calculator 1 can reliably assist the user in performing a technical task, which is to use graph analysis values universally.

The CPU 11 of the scientific calculator 1 stores a value specified by the user in association with a variable name specified by the user among the plurality of variable names included in the variable list table 152, and executes the universal-purpose variable utilization function in which the value of the variable name specified by the user among the plurality of variable names included in the variable list table 152 is input as an input value required for a function specified by the user. Therefore, according to the scientific calculator 1, executing the universal-purpose variable utilization function makes it possible to improve the convenience of the function specified by the user. In the analysis value storing function, when an analysis value is derived by the graph analysis function, the CPU 11 stores the analysis value in association with the variable name handled in the graph analysis function among the plurality of variable names included in the variable list table 152 without the user performing an operation of specifying the variable name. Therefore, according to the scientific calculator 1, the analysis value derived by the graph analysis function can be smoothly stored in the variable list table 152.

In the analysis value storing function, after an analysis value is derived by the graph analysis function, the CPU 11 of the scientific calculator 1 stores the analysis value in association with the variable name of the variable included in the calculation formula or the variable name in the variable list table 152 corresponding to the variable name indicating the coordinate axis of a graph (e.g., the graph G11), without the user performing an operation of instructing to store the analysis value or an operation of specifying the variable name in which the analysis value is stored. Therefore, according to the scientific calculator 1, the analysis value derived by the graph analysis function can be smoothly stored in the variable list table 152.

In the graph analysis function, the CPU 11 of the scientific calculator 1 displays coordinate values (xy coordinate values) satisfying a specified condition (for example, "y-Cal" or "x-Cal") on the graph display screen G1 displaying the graph G11 (see FIG. 10 and FIG. 15). In the analysis value storing function, the CPU 11 stores the coordinate values in association with the variable names in the variable list table 152 corresponding to the variable names indicating the coordinate axes of the graph G11. In the analysis value reuse function, the CPU 11 inputs the coordinate values stored as the values corresponding to the variable names indicating the coordinate axes of the graph G11 as input values required for a specific function. Therefore, according to the scientific calculator 1, since the coordinate values (xy coordinate values) satisfying the specified condition (for example, "y-Cal", "x-Cal") are displayed on the graph display screen G1 displaying the graph G11, the coordinate values can be easily grasped. In addition, in the analysis value storing function, the CPU 11 stores the coordinate values in association with the variable names in the variable list table 152 corresponding to the variable names indicating the coordinate axes of the graph G11. In the analysis value reuse function, the CPU 11 inputs the coordinate values stored as the values corresponding to the variable names indicating the coordinate axes of the graph G11 as input values required for a specific function. These allow the coordinate values to be used universally when a specific function that requires an input value is executed.

In the analysis value storing function, when storing an analysis value as the value of a predetermined variable name in the variable list table 152, the CPU 11 of the scientific calculator 1 displays a list of values corresponding to a plurality of variable names including the predetermined variable name and other variable names in the variable list table 152. Therefore, according to the scientific calculator 1, it is possible to confirm that the analysis value has been stored, i.e., it is possible to check the technical status of the device, and it is also possible to confirm the values corresponding to variable names other than the predetermined variable name in which the analysis value is stored. This makes it possible to expand the use of the analysis value reuse function.

In the graph analysis function, the CPU 11 of the scientific calculator 1 associates a plurality of variable names (variable x and variable y) included in a specified calculation formula (y=sin(x)) with a plurality of coordinate axes (x-axis and y-axis) in a coordinate system corresponding to the calculation formula, draws the graph G11 corresponding to the calculation formula in the coordinate system, and derives solutions of the variables included in the specified calculation formula. In the analysis value storing function, the CPU stores the derived solutions of the variables in association with the variable names corresponding to the solutions in the variable list table 152. These makes it possible to improve the convenience of the graph application of the scientific calculator 1.

In the analysis value storing function, the CPU 11 of the scientific calculator 1 stores the solutions of the variables derived by the graph analysis function in the variable list table 152 as the same variable names as the variable names of the variables included in the calculation formula. Therefore, according to the scientific calculator 1, the solutions of the variables can be smoothly stored (saved) in the variable list table 152. This allows the analysis value reuse function to be smoothly performed as well.

In the analysis value reuse function, when the graph analysis function is specified as a specific function, the CPU 11 of the scientific calculator 1 can input the derived solutions of the variables to the variables of the calculation formula with variable names different from the variable names in the variable list table 152 in which the derived solutions of the variables are stored, thereby expanding the use of the analysis value reuse function.

The description of the above embodiment is an example of a computing device, an information processing method, and a program according to the present disclosure, and is not limited thereto.

For example, in the above embodiment, when the graph analysis function ("x-Cal") that requires an input value for the variable y is executed, the analysis value reuse function was described with an exemplary case where the analysis value "0.66666666" stored as the value of the variable x was input as the value of the variable y by specifying the variable x in the variable list table 152. However, this case is merely an example.

For example, the analysis value reuse function can be executed even in a case where four arithmetic operations are performed in a basic calculation function. Specifically, when the addition (x+y) of the variable x and the variable y is executed, by inputting the variable x, the calculation symbol "+", the variable y, and the calculation symbol "=" in that order, the result of adding the analysis value stored as the value of the variable x (for example, "0.66666666") and the analysis value stored as the value of the variable y (for example, "0.01163526") is displayed on the display 10.

In the above embodiment, it is possible to perform analysis on the seven items in the graph analysis function: "ROOT", "Maximum Value", "Minimum Value", "Intersection", "y-Intercept", "y-Cal", and "x-Cal". However, in addition to the seven items, an item for deriving the gradient of a tangent, a local maximum, a local minimum, an inflection point, a trace point, or the like of a graph may be included. In this case, values indicated by the coordinates of the graph, such as a local maximum, a local minimum, an inflection point, or a trace point, may be automatically stored in association with the variable names in the variable list table 152 corresponding to the variable names indicating the coordinate axes of the graph. For a value not indicated by the coordinates of the graph, such as the gradient of a tangent of the graph, which variable name in the variable list table 152 the value is to be associated with and automatically stored in may be specified in advance.

In the above embodiment, each time the graph analysis process is executed, each derived analysis value may be stored in a predetermined table in an identifiable manner. In such a case, the analysis value reuse function is configured such that a desired analysis value can be specified and used from among the analysis values stored in the predetermined table.

In the above embodiment, in the graph analysis process, when a solution of a variable of a predetermined variable name is derived as an analysis value with respect to a calculation formula including the variable of the predetermined variable name, or when an analysis value is displayed as a coordinate value on a graph having the variable of the predetermined variable name as the coordinate axis, the derived analysis value is stored automatically as the value of the variable of the same variable name as the predetermined variable name in the variable list table 152 without the user performing an operation of storing the analysis value or an operation of specifying a variable name in which the derived analysis value is stored separately from the operation of instructing the derivation of the analysis value or the graph display. This makes it possible to save time and effort for the user to perform the operation of storing the analysis value or the operation of specifying a variable name. However, the derived analysis value may be stored as the variable of a specified variable name in the variable list table 152 after the user performs an operation of storing the analysis value or an operation of specifying the variable name. When a derived analysis value is stored automatically in the variable list table 152, if a value has already been stored as the same variable name, the derived analysis value may be stored after confirming the user whether the stored value can be overwritten, or after automatically changing a part of the variable name (for example, changing "x" to "x1" or "x2").

In the above embodiment, the scientific calculator 1 has been described as an application example of the computing device according to the present disclosure, but the scientific calculator 1 is applicable to electronic devices in general such as an electronic dictionary, a mobile phone, a smartphone, and a personal computer.

Further, the detailed configuration and the detailed operation of each constituent element of the scientific calculator 1 in the above embodiment can be appropriately modified within the scope of the appended claims.

## Claims

1. A computing device (1) comprising a processor (11), wherein the processor (11) executes:
a graph analysis function for deriving an analysis value by analyzing, based on a specified condition,
a graph (G11) expressed in a coordinate system corresponding to a specified calculation formula;
an analysis value storing function for storing the analysis value derived by the graph analysis function in a storage (15) as a value associated with a predetermined variable name in a variable list (152) in which a plurality of variable names are associated with values corresponding to respective variable names; and
an analysis value reusage function for, in response to a specific processing that requires an input value being executed, inputting the analysis value stored as the value with the predetermined variable name as the input value required for the specific processing in response to the predetermined variable name being specified in the variable list (152),
wherein in the graph analysis function executed by the processor (11), the specified condition includes any one of:
a first condition to derive a root of the graph (G11);
a second condition to derive a maximum value of the graph (G11);
a third condition to derive a minimum value of the graph (G11);
a fourth condition to derive an intercept of the graph (G11) at a coordinate axis in the coordinate system;
a fifth condition to derive, in response to the graph (G11) including a plurality of graphs being expressed, an intersection of the plurality of graphs;
a sixth condition to derive a value of a second variable, in response to the specified calculation formula being set to include a first variable and the second variable with the second variable dependent on the first variable and a desired value being input as a value of the first variable; and
a seventh condition to derive a value of a first variable, in response to the specified calculation formula being set to include the first variable and a second variable with the second variable dependent on the first variable and a desired value being input as a value of the second variable,
**characterized in that**
the processor (11) executes a variable utilization function for storing a value specified by a user in association with a variable name specified by the user from among the plurality of variable names included in the variable list (152), and inputting a value with a variable name specified by the user among the plurality of variable names included in the variable list (152) as an input value required for a processing specified by the user; and
in the analysis value storing function, in response to the analysis value being derived in the graph analysis, the processor (11) stores the analysis value in association with a variable name handled in the graph analysis among the plurality of variable names included in the variable list (152) without receiving a user operation to specify the variable name.

2. The computing device (1) according to claim 1, wherein in the analysis value storing function, after deriving the analysis value in the graph analysis function, the processor (11) stores the analysis value in association with a variable name of a variable included in the calculation formula or in association with a variable name in the variable list (152) corresponding to a variable name indicating a coordinate axis of the graph (G11), without receiving a user operation to instruct storage of the analysis value or to specify a variable name with which the analysis value is to be stored.

3. The computing device (1) according to claim 1 or 2, wherein:
in the graph analysis function, the processor (11) displays a coordinate value satisfying the specified condition on a graph display screen (G1) displaying the graph (G11);
in the analysis value storing function, the processor (11) stores the coordinate value in association with a predetermined variable name in the variable list (152) corresponding to a variable name indicating a coordinate axis of the graph (G11); and
in the analysis value reusage function, the processor (11) inputs the coordinate value stored in association with the variable name indicating the coordinate axis of the graph (G11) as the input value required for the specific processing.

4. The computing device (1) according to any one of claims 1 to 3, wherein:
in the graph analysis function, the processor (11) associates a plurality of variable names included in the specified calculation formula with a plurality of coordinate axes in the coordinate system corresponding to the calculation formula, draws the graph (G11) corresponding to the calculation formula in the coordinate system, and derives a solution of a variable included in the formula; and
in the analysis value storing function, the processor (11) stores the derived solution of the variable in association with a predetermined variable name in the variable list (152) corresponding to the solution of the variable.

5. The computing device (1) according to claim 4, wherein in the analysis value storing function, the processor (11) stores the solution of the variable derived in the graph analysis in association with a same variable name in the variable list (152) as a variable name of the variable included in the calculation formula.

6. The computing device (1) according to claim 4, wherein in the analysis value reusage function, in response to the graph analysis being specified as the specific processing, the processor (11) is capable of inputting the derived solution of the variable to a variable of the calculation formula with a variable name different from the variable name in the variable list (152) in which the derived solution of the variable is stored.

7. The computing device (1) according to any one of claims 1 to 6, wherein in the analysis value storing function, in response to the value with the predetermined variable name in the variable list (152) being stored, the processor displays a list of a plurality of values corresponding to a plurality of variable names including the predetermined variable name and another variable name in the variable list (152).

8. The computing device (1) according to any one of claims 1 to 7, wherein:
in the graph analysis function, in response to the sixth condition being specified as the condition and the desired value being input as the value of the first variable, the processor (11) derives the value of the second variable as the analysis value;
in the analysis value storing function, the processor (11) stores the analysis value derived in the graph analysis as a value in association with a variable name in the variable list (152) related to the second variable, and stores the desired value input in the graph analysis as a value in association with a variable name in the variable list (152) related to the first variable; and in the analysis value reusage function, in response to the graph analysis being specified as the specific processing and the seventh condition being specified as the condition, the processor (11) is capable of inputting the value with the variable name related to the first variable stored in the variable list (152) as a desired value of the second variable.

9. An information processing method executed by a processor (11) of a computing device (1), comprising:
deriving an analysis value by analyzing, based on a specified condition, a graph (G11) expressed in a coordinate system corresponding to a specified calculation formula;
storing the analysis value derived in the deriving in a storage (15) as a value associated with a predetermined variable name in a variable list (152) in which a plurality of variable names are associated with values corresponding to respective variable names; and,
in response to a specific processing that requires an input value being executed, inputting the analysis value stored as the value with the predetermined variable name as the input value required for the specific processing in response to the predetermined variable name being specified in the variable list (152),
wherein in the deriving an analysis value, the specified condition includes any one of:
a first condition to derive a root of the graph (G11);
a second condition to derive a maximum value of the graph (G11);
a third condition to derive a minimum value of the graph (G11);
a fourth condition to derive an intercept of the graph (G11) at a coordinate axis in the coordinate system;
a fifth condition to derive, in response to the graph (G11) including a plurality of graphs being expressed, an intersection of the plurality of graphs;
a sixth condition to derive a value of a second variable, in response to the specified calculation formula being set to include a first variable and the second variable with the second variable dependent on the first variable and a desired value being input as a value of the first variable; and
a seventh condition to derive a value of a first variable, in response to the specified calculation formula being set to include the first variable and a second variable with the second variable dependent on the first variable and a desired value being input as a value of the second variable,
**characterized by**
executing a variable utilization function for storing a value specified by a user in association with a variable name specified by the user from among the plurality of variable names included in the variable list (152), and inputting a value with a variable name specified by the user among the plurality of variable names included in the variable list (152) as an input value required for a processing specified by the user; and in that
in the analysis value storing, in response to the analysis value being derived in the graph analysis, the processor (11) stores the analysis value in association with a variable name handled in the graph analysis among the plurality of variable names included in the variable list (152) without receiving a user operation to specify the variable name.

10. A non-transitory storage medium comprising instructions which, when executed by processor (11) of a computer device (1), cause the processor (11) to execute all steps of a method according to claim 9.

## Patentansprüche

1. Rechenvorrichtung (1), die einen Prozessor (11) umfasst, wobei der Prozessor (11) ausführt:
eine Funktion zum Analysieren eines Graphen, mit der ein Analysewert hergeleitet wird, indem ein Graph (G11), der in einem einer festgelegten Berechnungsformel entsprechenden Koordinatensystem dargestellt ist, auf Basis einer festgelegten Bedingung analysiert wird;
eine Funktion zum Speichern des Analysewertes, mit der der mittels der Funktion zum Analysieren eines Graphen hergeleitete Analysewert in einem Speicher (15) als ein Wert in Verbindung mit einem vorgegebenen Variablennamen in einer Variablenliste (152) gespeichert wird, in der eine Vielzahl von Variablennamen mit jeweiligen Variablennamen entsprechenden Werten verbunden sind; sowie
eine Funktion zum Wiederverwenden eines Analysewertes, mit der in Reaktion darauf, dass eine festgelegte Verarbeitung ausgeführt wird, die einen Eingabewert erfordert, der als der Wert mit dem vorgegebenen Variablennamen gespeicherte Analysewert als der für den die festgelegte Verarbeitung erforderliche Eingabewert in Reaktion darauf eingegeben wird, dass der vorgegebene Variablenname in der Variablenliste (152) festgelegt ist, wobei bei der durch den Prozessor (11) ausgeführten Funktion zum Analysieren eines Graphen die festgelegte Bedingung eine beliebige der folgenden Bedingungen einschließt:
eine erste Bedingung zum Herleiten einer Wurzel des Graphen (G11);
eine zweite Bedingung zum Herleiten eines Maximalwertes des Graphen (G11);
eine dritte Bedingung zum Herleiten eines Minimalwertes des Graphen (G11);
eine vierte Bedingung zum Herleiten eines Achsenabschnitts des Graphen (G11) auf einer Koordinatenachse in dem Koordinatensystem;
eine fünfte Bedingung zum Herleiten eines Schnittpunktes einer Vielzahl von Graphen in Reaktion darauf, dass der Graph (G11) dargestellt wird, der die Vielzahl von Graphen einschließt;
eine sechste Bedingung zum Herleiten eines Wertes einer zweiten Variablen in Reaktion darauf, dass die festgelegte Berechnungsformel so eingerichtet wird, dass sie eine erste Variable und die zweite Variable einschließt, wobei die zweite Variable von der ersten Variablen abhängt und ein gewünschter Wert als ein Wert der ersten Variablen eingegeben wird; sowie
eine siebte Bedingung zum Herleiten eines Wertes einer ersten Variablen in Reaktion darauf, dass die festgelegte Berechnungsformel so eingerichtet wird, dass sie die erste Variable und eine zweite Variable einschließt, wobei die zweite Variable von der ersten Variablen abhängt und ein gewünschter Wert als ein Wert der zweiten Variablen eingegeben wird,
**dadurch gekennzeichnet, dass**
der Prozessor (11) eine Funktion zur Nutzung von Variablen ausführt, mit der ein von einem Benutzer festgelegter Wert in Verbindung mit einem Variablennamen gespeichert wird, der von dem Benutzer aus der Vielzahl von in der Variablenliste (152) enthaltenen Variablennamen festgelegt wird, sowie zum Eingeben eines Wertes mit einem Variablennamen, der von dem Benutzer von der Vielzahl von in der Variablenliste (152) enthaltenen Variablennamen festgelegt wird, als einen Eingabewert, der für eine von dem Benutzer festgelegte Verarbeitung erforderlich ist; und
bei der Funktion zum Speichern des Analysewertes der Prozessor (11) in Reaktion darauf, dass der Analysewert bei der Analyse des Graphen hergeleitet wird, den Analysewert von der Vielzahl von in der Variablenliste (152) enthaltenen Variablennamen in Verbindung mit einem bei der Analyse des Graphen verarbeiteten Variablenamen speichert, ohne eine Benutzerbetätigung zum Festlegen des Variablennamens zu empfangen.

2. Rechenvorrichtung (1) nach Anspruch 1, wobei bei der Funktion zum Speichern des Analysewertes der Prozessor (11) nach Herleiten des Analysewertes bei der Funktion zum Analysieren eines Graphen, den Analysewert in Verbindung mit einem Variablennamen einer in der Berechnungsformel enthaltenen Variablen oder in Verbindung mit einem Variablennamen in der Variablenliste (152), der einem Variablennamen entspricht, der eine Koordinatenachse des Graphen (G11) angibt, speichert, ohne eine Benutzerbetätigung zu empfangen, die Speicherung des Analysewertes anweist oder einen Variablennamen festlegt, mit dem der Analysewert zu speichern ist.

3. Rechenvorrichtung (1) nach Anspruch 1 oder 2, wobei:
der Prozessor (11) bei der Funktion zum Analysieren eines Graphen einen Koordinatenwert, der die festgelegte Bedingung erfüllt, auf einem Graphen-Anzeigebildschirm (G1) anzeigt, der den Graphen (G11) anzeigt;
der Prozessor (11) bei der Funktion zum Speichern des Analysewertes den Koordinatenwert in Verbindung mit einem vorgegebenen Variablennamen in der Variablenliste (152) speichert, die einem Variablennamen entspricht, der eine Koordinatenachse des Graphen (G11) angibt; und
der Prozessor (11) bei der Funktion zum Wiederverwenden eines Analysewertes den in Verbindung mit dem Variablennamen, der die Koordinatenachse des Graphen (G11) angibt, gespeicherten Koordinatenwert als den für die festgelegte Bearbeitung erforderlichen Eingabewert eingibt.

4. Rechenvorrichtung (1) nach einem der Ansprüche 1 bis 3, wobei:
der Prozessor (11) bei der Funktion zum Analysieren eines Graphen eine Vielzahl von Variablennamen, die in der festgelegten Berechnungsformel enthalten sind, mit einer Vielzahl von Koordinatenachsen in dem Koordinatensystem verbindet, das der Berechnungsformel entspricht, den Graphen (G11), der der Berechnungsformel entspricht, in dem Koordinatensystem darstellt und eine Lösung einer Variablen herleitet, die in der Formel enthalten ist; und
der Prozessor (11) bei der Funktion zum Speichern des Analysewertes die hergeleitete Lösung der Variablen in Verbindung mit einem vorgegebenen Variablennamen in der Variablenliste (152) speichert, die der Lösung der Variablen entspricht.

5. Rechenvorrichtung (1) nach Anspruch 4, wobei der Prozessor (11) bei der Funktion zum Speichern des Analysewertes die bei der Analyse eines Graphen hergeleitete Lösung in Verbindung mit einem gleichen Variablennamen in der Variablenliste (152) wie einem Variablennamen der in der Berechnungsformel enthaltenen Variablen speichert.

6. Rechenvorrichtung (1) nach Anspruch 4, wobei der Prozessor (11) bei der Funktion zum Wiederverwenden eines Analysewertes in der Lage ist, in Reaktion darauf, dass die Analyse eines Graphen als die festgelegte Bearbeitung festgelegt wird, die hergeleitete Lösung der Variablen in eine Variable der Berechnungsformel mit einem anderen Variablennamen als dem Variablennamen in der Variablenliste (152) einzugeben, in der die hergeleitete Lösung der Variablen gespeichert wird.

7. Rechenvorrichtung (1) nach einem der Ansprüche 1 bis 6, wobei der Prozessor bei der Funktion zum Speichern des Analysewertes in Reaktion darauf, dass der Wert mit dem vorgegebenen Variablennamen in der Variablenliste (152) gespeichert wird, eine Liste einer Vielzahl von Werten anzeigt, die einer Vielzahl von Variablennamen entsprechen, die den vorgegebenen Variablennamen und einen anderen Variablennamen in der Variablenliste (152) einschließen.

8. Rechenvorrichtung (1) nach einem der Ansprüche 1 bis 7, wobei:
der Prozessor (11) bei der Funktion zum Analysieren eines Graphen, in Reaktion darauf, dass die sechste Bedingung als die Bedingung festgelegt ist und der gewünschte Wert als der Wert der ersten Variablen eingegeben wird, den Wert der zweiten Variablen als den Analysewert herleitet;
der Prozessor (11) bei der Funktion zum Speichern des Analysewertes den bei der Analyse eines Graphen hergeleiteten Analysewert als einen Wert in Verbindung mit einem Variablennamen in der Variablenliste (152) bezogen auf die zweite Variable speichert, und den bei der Analyse eines Graphen eingegebenen gewünschten Wert als einen Wert in Verbindung mit einem Variablennamen in der Variablenliste (152) bezogen auf die erste Variable speichert, und
der Prozessor (11) bei der Funktion zum Wiederverwenden eines Analysewertes in der Lage ist, in Reaktion darauf, dass die Analyse eines Graphen als die festgelegte Bearbeitung festgelegt wird und die siebte Bedingung als die Bedingung festgelegt wird, den Wert mit dem Variablennamen bezogen auf die in der Variablenliste (152) gespeicherte erste Variable als einen gewünschten Wert der zweiten Variablen einzugeben.

9. Informationsverarbeitungs-Verfahren, das von einem Prozessor (11) einer Rechenvorrichtung (1) ausgeführt wird, umfassend:
Herleiten eines Analysewertes durch Analysieren eines Graphen (G11), der in einem einer festgelegten Berechnungsformel entsprechenden Koordinatensystem dargestellt ist, auf Basis einer festgelegten Bedingung;
Speichern des bei dem Herleiten hergeleiteten Analysewertes in einem Speicher (15) als einen Wert, in Verbindung mit einem vorgegebenen Variablennamen in einer Variablenliste (152), in der eine Vielzahl von Variablennamen mit jeweiligen Variablennamen entsprechenden Werten verbunden sind; sowie
in Reaktion auf Ausführung einer vorgegebenen Bearbeitung, die einen Eingabewert erfordert, Eingeben des als der Analysewert mit dem vorgegebenen Variablennamen gespeicherten Analysewertes als den Eingabewert, der für die festgelegte Bearbeitung erforderlich ist, in Reaktion darauf, dass der vorgegebene Variablenname in der Variablenliste (152) festgelegt ist,
wobei bei dem Herleiten eines Analysewertes die festgelegte Bedingung eine beliebige der folgenden Bedingungen einschließt:
eine erste Bedingung zum Herleiten einer Wurzel des Graphen (G11);
eine zweite Bedingung zum Herleiten eines Maximalwertes des Graphen (G11);
eine dritte Bedingung zum Herleiten eines Minimalwertes des Graphen (G11);
eine vierte Bedingung zum Herleiten eines Achsenabschnitts des Graphen (G11) auf einer Koordinatenachse in dem Koordinatensystem;
eine fünfte Bedingung zum Herleiten eines Schnittpunktes einer Vielzahl von Graphen in Reaktion darauf, dass der Graph (G11), dargestellt wird, der die Vielzahl von Graphen einschließt,;
eine sechste Bedingung zum Herleiten eines Wertes einer zweiten Variablen in Reaktion darauf, dass die festgelegte Berechnungsformel so eingerichtet wird, dass sie eine erste Variable und eine zweite Variable einschließt, wobei die zweite Variable von der ersten Variable abhängt und ein gewünschter Wert als ein Wert der ersten Variablen eingegeben wird; sowie
eine siebte Bedingung zum Herleiten eines Wertes einer ersten Variablen in Reaktion darauf, dass die festgelegte Berechnungsformel so eingerichtet wird, dass sie die erste Variable und eine zweite Variable einschließt, wobei die zweite Variable von der ersten Variable abhängt und ein gewünschter Wert als ein Wert der zweiten Variablen eingegeben wird;
**gekennzeichnet durch**
Ausführen einer Funktion zur Nutzung von Variablen zum Speichern eines durch einen Benutzer festgelegten Wertes in Verbindung mit einem von dem Benutzer aus der Vielzahl in der Variablenliste (152) enthaltener Variablennamen festgelegten Variablennamen, sowie zum Eingeben eines Wertes mit einem Variablennamen, der von dem Benutzer von der Vielzahl von in der Variablenliste (152) enthaltenen Variablennamen festgelegt wird, als einen Eingabewert, der für eine von dem Benutzer festgelegte Verarbeitung erforderlich ist; und **dadurch, dass**
der Prozessor (11) bei dem Speichern des Analysewertes in Reaktion darauf, dass der Analysewert bei der Analyse des Graphen hergeleitet wird, den Analysewert von der Vielzahl von in der Variablenliste (152) enthaltenen Variablennamen in Verbindung mit einem bei der Analyse des Graphen verarbeiteten Variablenamen speichert, ohne eine Benutzerbetätigung zum Festlegen des Variablennamens zu empfangen.

10. Nichtflüchtiges Speichermedium, das Befehle umfasst, die, wenn sie von einem Prozessor (11) einer Rechenvorrichtung (1) ausgeführt werden, den Prozessor (11) veranlassen, alle Schritte eines Verfahrens nach Anspruch 9 auszuführen.

## Revendications

1. Dispositif informatique (1) comprenant un processeur (11), dans lequel le processeur (11) exécute :
une fonction d'analyse de graphe pour dériver une valeur d'analyse en analysant, sur la base d'une condition spécifiée, un graphe (G11) exprimé dans un système de coordonnées correspondant à une formule de calcul spécifiée ;
une fonction de stockage de valeurs d'analyse pour stocker la valeur d'analyse dérivée par la fonction d'analyse de graphe dans un stockage (15) comme valeur associée à un nom de variable prédéterminé dans une liste de variables (152) où une pluralité de noms de variable est associée à des valeurs correspondant à des noms de variable respectifs ; et
une fonction de réutilisation de valeur d'analyse pour, en réponse à un traitement spécifique qui requiert l'exécution d'une valeur de saisie, saisir la valeur d'analyse stockée comme valeur avec le nom de variable prédéterminé comme la valeur de saisie requise pour le traitement spécifique en réponse au nom de variable prédéterminé spécifié dans la liste de variables (152),
dans lequel, dans la fonction d'analyse de graphe exécutée par le processeur (11), la condition spécifiée inclut l'une quelconque des conditions suivantes :
une première condition pour dériver une racine du graphe (G11) ;
une deuxième condition pour dériver une valeur maximale du graphe (G11) ;
une troisième condition pour dériver une valeur minimale du graphe (G11) ;
une quatrième condition pour dériver une intersection du graphe (G11) avec un axe de coordonnées dans le système de coordonnées ;
une cinquième condition pour dériver, en réponse à l'inclusion dans le graphe (G11) d'une pluralité de graphes exprimés, une intersection de la pluralité de graphes ;
une sixième condition pour dériver la valeur d'une deuxième variable, en réponse à la définition de la formule de calcul spécifiée pour inclure une première variable et la deuxième variable, la deuxième variable dépendant de la première variable et une valeur désirée étant saisie comme une valeur de la première variable ; et
une septième condition pour dériver la valeur d'une première variable, en réponse à la définition de la formule de calcul spécifiée pour inclure la première variable et
une deuxième variable, la deuxième variable dépendant de la première variable et une valeur désirée étant saisie comme valeur de la deuxième variable,
**caractérisé en ce que**
le processeur (11) exécute une fonction d'utilisation de variable pour stocker une valeur spécifiée par un utilisateur en association avec un nom de variable spécifié par l'utilisateur parmi la pluralité de noms de variable inclus dans la liste de variables (152), et pour saisir une valeur avec un nom de variable spécifié par l'utilisateur parmi la pluralité de noms de variable inclus dans la liste de variables (152) comme valeur de saisie requise pour un traitement spécifié par l'utilisateur ; et
dans la fonction de stockage de valeurs d'analyse, en réponse à la valeur d'analyse dérivée dans l'analyse de graphe, le processeur (11) stocke la valeur d'analyse en association avec un nom de variable géré dans l'analyse de graphe parmi la pluralité de noms de variable inclus dans la liste de variables (152) sans recevoir d'opération de l'utilisateur pour spécifier le nom de variable.

2. Dispositif informatique (1) selon la revendication 1, dans lequel, dans la fonction de stockage de valeurs d'analyse, après avoir dérivé la valeur d'analyse dans la fonction d'analyse de graphe, le processeur (11) stocke la valeur d'analyse en association avec un nom de variable d'une variable incluse dans la formule de calcul ou en association avec un nom de variable dans la liste de variables (152) correspondant à un nom de variable indiquant un axe de coordonnées du graphe (G11), sans recevoir d'opération de l'utilisateur pour ordonner le stockage de la valeur d'analyse ou pour spécifier un nom de variable sous lequel la valeur d'analyse doit être stockée.

3. Dispositif informatique (1) selon la revendication 1 ou 2, dans lequel :
dans la fonction d'analyse de graphe, le processeur (11) affiche une valeur de coordonnée satisfaisant la condition spécifiée sur un écran d'affichage de graphe (G1) affichant le graphe (G11) ;
dans la fonction de stockage de valeurs d'analyse, le processeur (11) stocke la valeur de coordonnée en association avec un nom de variable prédéterminé dans la liste de variables (152) correspondant à un nom de variable indiquant un axe de coordonnées du graphe (G11) ; et
dans la fonction de réutilisation de valeur d'analyse, le processeur (11) saisit la valeur de coordonnée stockée en association avec le nom de variable indiquant l'axe de coordonnées du graphe (G11) comme valeur de saisie requise pour le traitement spécifique.

4. Dispositif informatique (1) selon l'une quelconque des revendications 1 à 3, dans lequel :
dans la fonction d'analyse de graphe, le processeur (11) associe une pluralité de noms de variable inclus dans la formule de calcul spécifiée à une pluralité d'axes de coordonnées dans le système de coordonnées correspondant à la formule de calcul, dessine le graphe (G11) correspondant à la formule de calcul dans le système de coordonnées, et dérive une solution d'une variable incluse dans la formule ; et
dans la fonction de stockage de valeurs d'analyse, le processeur (11) stocke la solution dérivée de la variable en association avec un nom de variable prédéterminé dans la liste de variables (152) correspondant à la solution de la variable.

5. Dispositif informatique (1) selon la revendication 4, dans lequel, dans la fonction de stockage de valeurs d'analyse, le processeur (11) stocke la solution de la variable dérivée dans l'analyse de graphe en association avec un même nom de variable dans la liste de variables (152) comme nom de variable de la variable incluse dans la formule de calcul.

6. Dispositif informatique (1) selon la revendication 4, dans lequel, dans la fonction de réutilisation de valeur d'analyse, en réponse à l'analyse de graphe spécifiée comme traitement spécifique, le processeur (11) est capable de saisir la solution dérivée de la variable dans une variable de la formule de calcul avec un nom de variable différent du nom de variable dans la liste de variables (152) où la solution dérivée de la variable est stockée.

7. Dispositif informatique (1) selon l'une quelconque des revendications 1 à 6, dans lequel, dans la fonction de stockage de valeurs d'analyse, en réponse au stockage de la valeur avec le nom de variable prédéterminé dans la liste de variables (152), le processeur affiche une liste d'une pluralité de valeurs correspondant à une pluralité de noms de variable incluant le nom de variable prédéterminé et un autre nom de variable dans la liste de variables (152).

8. Dispositif informatique (1) selon l'une quelconque des revendications 1 à 7, dans lequel :
dans la fonction d'analyse de graphe, en réponse à la sixième condition spécifiée comme condition et à la valeur désirée saisie comme valeur de la première variable, le processeur (11) dérive la valeur de la deuxième variable comme valeur d'analyse ;
dans la fonction de stockage de valeurs d'analyse, le processeur (11) stocke la valeur d'analyse dérivée dans l'analyse de graphe comme une valeur en association avec un nom de variable dans la liste de variables (152) liée à la deuxième variable, et stocke la valeur désirée saisie dans l'analyse de graphe comme une valeur en association avec un nom de variable dans la liste de variables (152) liée à la première variable ; et
dans la fonction de réutilisation de valeur d'analyse, en réponse à l'analyse de graphe spécifiée comme traitement spécifique et à la septième condition spécifiée comme condition, le processeur (11) est capable de saisir la valeur avec le nom de variable lié à la première variable stockée dans la liste de variables (152) comme valeur désirée de la deuxième variable.

9. Procédé de traitement d'information exécuté par un processeur (11) d'un dispositif informatique (1), comprenant :
la dérivation d'une valeur d'analyse en analysant, sur la base d'une condition spécifiée, un graphe (G11) exprimé dans un système de coordonnées correspondant à une formule de calcul spécifiée ;
le stockage de la valeur d'analyse dérivée lors de la dérivation dans un stockage (15) comme valeur associée à un nom de variable prédéterminé dans une liste de variables (152) où une pluralité de noms de variable est associée à des valeurs correspondant à des noms de variable respectifs ; et
en réponse à un traitement spécifique qui requiert l'exécution d'une valeur de saisie, la saisie de la valeur d'analyse stockée comme valeur avec le nom de variable prédéterminé comme valeur de saisie requise pour le traitement spécifique en réponse au nom de variable prédéterminé spécifié dans la liste de variables (152),
dans lequel, pour dériver une valeur d'analyse, la condition spécifiée inclut l'une quelconque des conditions suivantes :
une première condition pour dériver une racine du graphe (G11) ;
une deuxième condition pour dériver une valeur maximale du graphe (G11) ;
une troisième condition pour dériver une valeur minimale du graphe (G11) ;
une quatrième condition pour dériver une intersection du graphe (G11) avec un axe de coordonnées dans le système de coordonnées ;
une cinquième condition pour dériver, en réponse à l'inclusion dans le graphe (G11) d'une pluralité de graphes exprimés, une intersection de la pluralité de graphes ;
une sixième condition pour dériver la valeur d'une deuxième variable, en réponse à la définition de la formule de calcul spécifiée pour inclure une première variable et la deuxième variable, la deuxième variable dépendant de la première variable et une valeur désirée étant saisie comme valeur de la première variable ; et
une septième condition pour dériver la valeur d'une première variable, en réponse à la définition de la formule de calcul spécifiée pour inclure la première variable et une deuxième variable, la deuxième variable dépendant de la première variable et une valeur désirée étant saisie comme valeur de la deuxième variable,
**caractérisé**
**par** l'exécution d'une fonction d'utilisation de variable pour stocker une valeur spécifiée par un utilisateur en association avec un nom de variable spécifié par l'utilisateur parmi la pluralité de noms de variable inclus dans la liste de variables (152), et la saisie d'une valeur avec un nom de variable spécifié par l'utilisateur parmi la pluralité de noms de variable inclus dans la liste de variables (152) comme valeur de saisie requise pour un traitement spécifié par l'utilisateur ; et
en ce que, dans le stockage de valeurs d'analyse, en réponse à la dérivation de la valeur d'analyse dans l'analyse de graphe, le processeur (11) stocke la valeur d'analyse en association avec un nom de variable géré dans l'analyse de graphe parmi la pluralité de noms de variable inclus dans la liste de variables (152) sans recevoir une opération de l'utilisateur pour spécifier le nom de variable.

10. Support de stockage non volatil comprenant des instructions qui, lorsqu'elles sont exécutées par le processeur (11) d'un dispositif informatique (1), commandent au processeur (11) d'exécuter toutes les étapes d'un procédé selon la revendication 9.
